# EUROPEAN PATENT APPLICATION

(11) **EP 2 293 372 A1**
(43) Date of publication of application: **09.03.2011**
(21) Application number: 10157498.6
(22) Date of filing: 24.03.2010
(51) Int. Cl.: H01M 8/12, H01M 8/24

(54) **Combined Cell Structure for Solid Oxide Fuel Cell**

(30) Priority: 04.09.2009 US 240095 P
(71) Applicant: Samsung SDI Co., Ltd., Gyeonggi-do (KR)
(72) Inventor: Taniguchi, Shunsuke, Gyeonggi-do (KR)
(74) Representative: Walaski, Jan Filip

(57) **Abstract**

There is provided a combined cell structure for a solid oxide fuel cell provided with a structure in which a plurality of tube-type or flat-tube-type solid oxide fuel cell are combined with one another in series in a longitudinal direction. The combined cell structure includes first and second cells each having a first electrode, a second electrode and an electrolyte layer interposed between the first and second electrodes; a first support member for passing through a hollow portion of the first cell; and a second support member for passing through a hollow portion of the second cell. In the combined cell structure, one ends of the first and second support members facing each other are fixedly combined with each other. Accordingly, the first and second cells are connected to each other in the flow direction of a reactant.

## Description

An aspect of the present invention relates to a combined cell structure for a solid oxide fuel cell provided with a structure in which a plurality of tube-type or flat-tube-type solid oxide fuel cells are combined with one another in series in a longitudinal direction.

Solid oxide fuel cells (SOFCs) have advantages of no pollution, high-efficiency power generation, and the like. The SOFCs are applied to stationary power generation systems, small power supply and vehicle power sources. An SOFC cell may be manufactured as a tube-type cell, a flat-tube-type cell or a flat-plate-type cell. The tube-type or flat-tube-type cell may be manufactured to have a structure for a cathode supported cell, a segmented in series cell, an anode supported cell, or the like.

Currently, anode supported SOFC cells are frequently used for small SOFC systems in the range of 1 to 10KW. On the other hand, cathode supported SOFC cells or segmented in series cells are frequently used for large SOFC systems in the range of 100KW or more.

In one embodiment, there is provided a combined cell structure for a solid oxide fuel cell (hereinafter, referred to as a SOFC combined cell structure), which can easily manufacture a large SOFC system using a plurality of anode supported SOFC cells.

In another embodiment, there is provided an SOFC combined cell structure which can have durability for thermal and mechanical stresses generated in series combination of a plurality of anode supported SOFC cells, simplify the design of a manifold, and prevent an increase in current collecting resistance.

According the present invention, there is provided a combined cell structure for a solid oxide fuel cell comprising:
first and second cells, each having a first electrode, a second electrode and an electrolyte layer interposed between the first and second electrodes;
a first support member passing through a hollow portion of the first cell; and
a second support member passing through a hollow portion of the second cell, wherein an end of the first support member and an end of the second support member are connected to each other.

Preferably, each first electrode, second electrode and electrolyte layer comprise concentric layers with the support member positioned along a central axis.

Preferably, each end of the first and second support members includes a threaded portion for connecting the support members to each other.

In some embodiments, the ends of the first and second support members are directly connected to each other. In other embodiments, a coupling member is provided for connecting the ends of first and second support members.

A connector may be interposed between the first and second cells. The connector is preferably disposed to be resiliently deformed by stress of first or second cells.

The combined cell structure may further comprise a sealing member disposed in at least one of spaces between the first cell and the connector and between the second cell and the connector.

In some embodiments, each of the first and second support members is a solid rod.

In other embodiments, each of the first and second support members is a tube. The tube may comprise a plurality of openings or holes in a side wall of the tube.

Preferably, each of the first and second support members comprise a protruding portion protruding radially from an end portion thereof. Preferably, the protruding portion is in the shape of a ring. The protruding portion may comprise a plurality of holes for allowing fluid to flow through the protruding portion. Preferably, the protruding portion is exposed to the outside of the combined cell structure.

The provision of a protruding portion exposed to the outside of the combined cell structure allows easier electric wiring connections to be made among the combined cell structures.

The first and second support members may be formed of any one of stainless steel, nickel and nickel alloy.

The combined cell structure preferably comprises porous members respectively disposed between the first electrodes and the first and second support members.

The combined cell structure may further comprise a current collector combined to come in contact with the second electrode.

The first electrode may have at least one of a circular shape, an elliptical shape or a polygonal tube shape.

Embodiments of the present invention will now be described with reference to the accompanying drawings, in which:
FIG. 1A is a schematic front view of an SOFC combined cell structure (hereinafter, referred to as a combined cell structure) according to an embodiment;
FIGS. 1B and 1C are cross-sectional views illustrating SOFC cells applicable to the combined cell structure of FIG. 1A;
FIG. 2 is a partial enlarged sectional view of a combined cell structure according to the embodiment;
FIG. 3A is a sectional view of a support member in the combined cell structure of FIG. 2.
FIG. 3B is a sectional view of a connector in the combined cell structure of FIG. 2;
FIG. 3C is a front view of the connector in the combined cell structure of FIG. 2;
FIG. 4 is a sectional view illustrating an SOFC stack using the combined cell structure of FIG. 2;
FIG. 5 is a sectional view illustrating an SOFC stack using a combined cell structure according to still another embodiment;
FIG. 6 is a sectional view of a support member used in the SOFC stack using the combined cell structure of FIG. 5;
FIG. 7 is a partial sectional view of a combined cell structure according to still another embodiment;
FIG. 8 is a sectional view of a support member in the combined cell structure of FIG. 7;
FIGS. 9A to 9C are sectional views illustrating a process of manufacturing an SOFC stack using the combined cell structure of FIG. 7;
FIG. 10 is a sectional view illustrating an SOFC stack using a combined cell structure according to still another embodiment;
FIG. 11 is a sectional view of a support member used in the SOFC stack using the combined cell structure of FIG. 10;
FIG. 12 is a partial sectional view of a combined cell structure according to still another embodiment;
FIG. 13 is a sectional view of a support member in the combined cell structure of FIG. 12;
FIGS. 14A to 14C sectional views illustrating a process of manufacturing an SOFC stack using the combined cell structure of FIG. 12;
FIG. 15 is a sectional view illustrating an SOFC stack using a combined cell structure according to still another embodiment;
FIG. 16 is a sectional view of a support member used in the SOFC stack using the combined cell structure of FIG. 15;
FIGS. 17A and 17B are sectional views illustrating the combined structures of another shaped support members applicable to the combined cell structure according to the embodiments; and
FIG. 18 is a sectional view illustrating another combined structure of still another shaped support members applicable to the combined cell structure according to the embodiments.

In the following description, detailed explanation of known related functions and constitutions may be omitted to avoid unnecessarily obscuring the subject manner of the present invention. In the drawings, like elements are represented by like reference numerals, and the thickness and size of layers may be exaggerated for clarity.

The term "manifold" mentioned in the following description refers to a structure provided with a flow path for smoothly supplying, distributing or discharging a fluid. In the description related to the accompanying drawings, a housing or boundary wall forming a manifold is designated by a reference numeral and referred to as the manifold, for convenience of illustration.

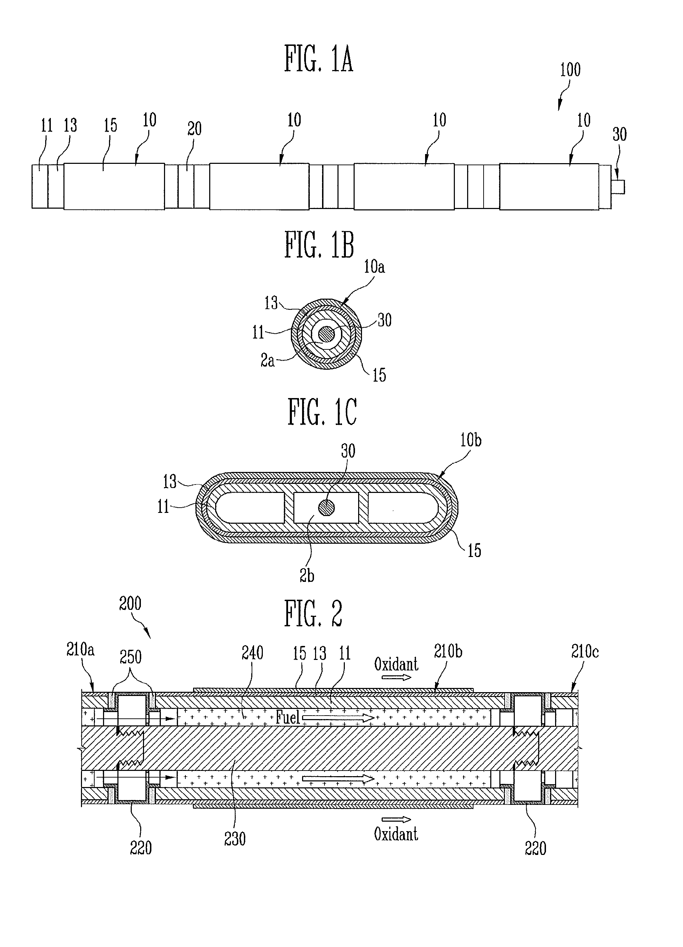

FIG. 1A is a schematic front view of an SOFC combined cell structure (hereinafter, referred to as a combined cell structure) according to an embodiment. FIGS. 1B and 1C are cross-sectional views illustrating SOFC cells applicable to the combined cell structure of FIG. 1A.

Referring to FIG. 1A, the combined cell structure 100 includes a plurality of tube-type or flat-tube-type SOFC cells 10 combined with one another in a longitudinal direction of the combined cell structure 100, and a solid support member 30 inserted to pass through the combined structure of the SOFC cells 10 from one end to the other end of the combined structure of the SOFC cells 10. The plurality of SOFC cells 10 have a series combined structure mechanically or physically stabilized by the support member 30. The serial combined structure refers to a structure in which tube-type of flat-tube-type SOFC cells each having a predetermined length are combined with one another in a longitudinal direction. A connector 20 may be disposed between adjacent SOFC cells.

In one embodiment, the support member 30 may be provided to pass through hollow portions of the respective SOFC cells 10 and may be configured so that a plurality of divided support members respectively provided to the SOFC cells adjacent to one another are integrally combined with one another in a longitudinal direction thereof. At this time, each of the SOFC cells provided with the support member 30 may be referred to as an SOFC sub-cell. The SOFC sub-cells (hereinafter, referred to as sub-cells) become unit cell structures constituting the combined cell structure.

Each of the SOFC cells 10 includes a first electrode 11, a second electrode 15 and an electrolyte 13 interposed between the first and second electrodes 11 and 15. The first electrode 11 is an anode or cathode. When the first electrode 11 is an anode, the second electrode 15 is a cathode. When the first electrode 11 is a cathode, the second electrode 15 is an anode. The electrolyte 13 is formed of an ion conductive oxide material for transporting oxygen ions or protons. The SOFC cell 10 becomes a unit in which electricity and water are produced by an electrochemical reaction of hydrogen and oxygen respectively supplied to the anode and cathode.

In one embodiment, a porous Ni/YSZ cermet may be used as the material of the first electrode 11. A porous mixed conducting oxide may be used as the material of the second electrode 15. Yttria stabilized zirconia (YSZ) may be used as the material of the electrolyte 13.

In one embodiment, the SOFC cells to which the support member 30 can be applied may be tube-type SOFC cells 10a substantially having a circular section as illustrated in FIG. 1B or a flat-tube-type SOFC cells 10b substantially having an elliptical section as illustrated in FIG. 1C. In the case of the tube-type SOFC cells 10a, the support member 30 is inserted into a hollow portion 2a of each of the SOFC cells 10a. In the case of the flat-tube-type SOFC cells 10b, the support member 30 may be a central hollow portion 2b of three hollow portions.

The combined cell structure of this embodiment is basically provided for the series combined structure of anode supported SOFC cells. However, it will be apparent that the combined cell structure of this embodiment is identically applied to tube-type or flat-tube-type SOCF cells of cathode supported SOFC cells, segmented in series cells or the like. Hereinafter, various types of combined cell structures will be described in more detail.

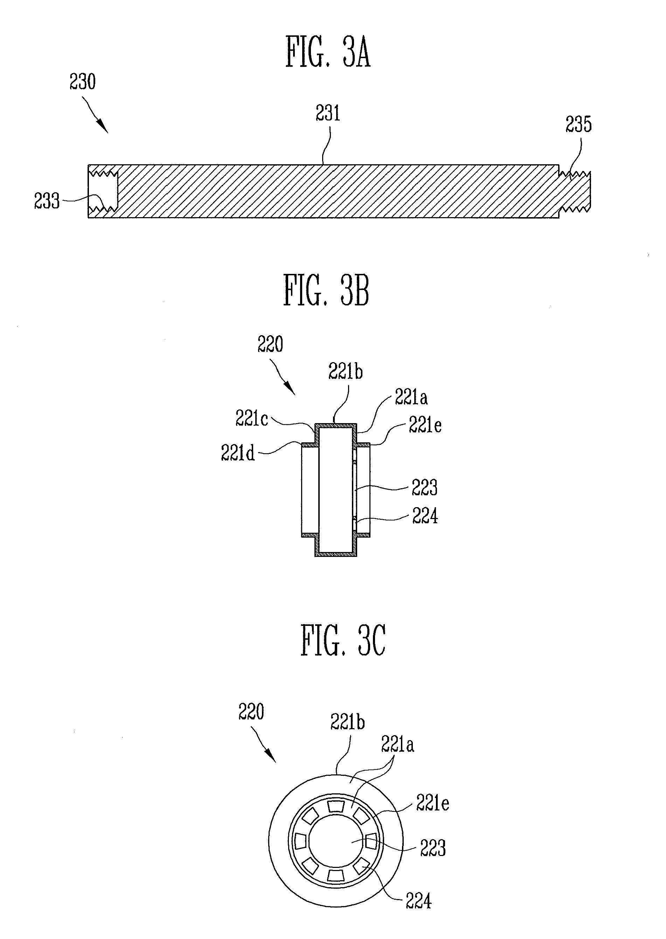

FIG. 2 is a partial sectional view of a combined cell structure according to another embodiment. FIG. 3A is a sectional view of a support member in the combined cell structure of FIG. 2. FIG. 3B is a sectional view of a connector in the combined cell structure of FIG. 2. FIG. 3C is a front view of the connector in the combined cell structure of FIG. 2.

Referring to FIG. 2, the combined cell structure 200 includes a plurality of sub-cells 210a, 210b and 210c combined with one another in a direction along which a fuel flows, and connectors 220 disposed between adjacent sub-cells. A sealing member 250 may be provided between each of the sub-cells and the connector 220.

Each of the sub-cells 210a, 210b and 210c includes a first electrode 11 for forming a tube-type or flat-tube-type anode support body, a solid electrolyte 13 formed on the outer circumferential surface of the first electrode 11, a second electrode 15 formed on the solid electrolyte 13, and a support member 230 inserted into a hollow portion of the first electrode 11. A porous member 240 may be provided between the support member 230 and the first electrode 11.

As illustrated in FIG. 3A, the support member 230 is provided with a rod-shaped body 231 having a predetermined length. The body 231 may have no void space in the interior thereof and may have a circular section or a polygonal section inscribed or circumscribed in a circle. Female and male screws 233 and 235 used in combination with another support member are provided at both end portions of the body 231, respectively. The material of the support member 230 may include stainless steel, nickel, nickel alloy and the like.

The connector 220 may be disposed to avoid a direct contact between adjacent SOFC cells in the combined cell structure 200. The connector 220 may be formed of a conducting metal material. In one embodiment, as illustrated in FIGS. 3B and 3C, the connector 220 includes a disk-shaped first portion 221a and a second portion 221b extending in a thickness direction of the first portion 221a from an edge of the first portion 221a.

The area of the first portion 221a is almost similar to that of the section of the sub-cell. A first hole 223 is provided at a central portion of the first portion 221a. Here, the support member 230 can be inserted in the longitudinal direction through the first hole 223. A plurality of second holes 224 passing through the first portion 221a in the thickness direction of the first portion 221a are provided around the first hole 223. The plurality of second holes 224 allow a fluid to flow by passing through the first portion 221a.

A projection 221e protruding in the opposite direction to the extending direction of the second portion 221b is provided at a side of the first portion 221a. The projection 221e is inserted in the hollow portion of a first sub-cell of two adjacent sub-cells. The projection 221e may be formed in the shape of a circular ring surrounding the plurality of second holes 224 at a side of the first portion 221a. Here, the circular ring may have the form of a solid line (or dotted line).

The thickness of at least a portion of the second portion 221b is shorter than thickness of the support member 230. An end portion of the second portion has an end 221d bent to be inserted into the hollow portion of a second sub-cell of the two adjacent sub-cells. A stepped portion 221c may be provided to the bend portion. The stepped portion 221c may be provided to face one side of the longitudinal direction of the second sub-cell.

If the thickness of at least a portion of the second portion 221b is thinner than that of the support member 230, there is an effect in that the connector 220 resiliently reacts when compressive stress is applied between the cells and the support members in operation of the combined cell structure 200, thereby reducing undesired thermal stress generated in the combined cell structure 200.

The porous member 240 is provided with a porous structure in which a fluid may flow along the outer circumferential surface of the support member 230. The porous member 240 is formed of a material with excellent conductivity so that the support member 230 is electrically connected to the first electrode 11 in each of the sub-cells. The porous member 240 may be formed of a nickel felt, a metal felt made of another metal except nickel, a metal mesh, or the like.

The sealing member 250 is provided to seal between the sub-cell and the connector. The sealing member 250 may include PYREX (product name), composite of ceramic and glass, Thermiculite #866 (product name), and the like. In another embodiment, the boundary portion between sub-cell and the connector may be directly connected using a brazing technique.

Herein after, the process of manufacturing a sub-cell in the combined cell structure according to the embodiment will be described in more detail.
First, an yttria-stabilized zirconia (YSZ) powder mixed with 40vol% nickel (Ni) is kneaded by adding activated carbon, organic binder and water to the YSZ powder, and the kneaded slurry is extrusion-molded. After drying the extrusion-molded slurry, an anode support tube is prepared by sintering the dried slurry at about 1300°C.

Subsequently, the YSZ powder is prepared as an electrolyte slurry, and the electrolyte slurry is then dip-coated on the anode support tube using a slurry coating technique. The electrolyte slurry coated on the anode support tube is dried at a room temperature and then sintered at about 1400°C.

Subsequently, a (La,Sr)MnO₃ (LSM) powder is prepared as a cathode slurry, the cathode slurry is then dip-coated on the electrolyte layer of the anode support tube. The cathode slurry coated on the electrolyte layer of the anode support tube is dried and then sintered at about 1200°C. The manufactured SOFC cell has an outer diameter of about 20mm, an inner diameter of about 16mm and a length of about 300mm.

Subsequently, an SOFC sub-cell is manufactured by preparing a support member 230 formed of stainless steel, surrounding the support member 230 with a nickel felt and then inserting the support member 230 into a hollow portion of the SOFC cell.

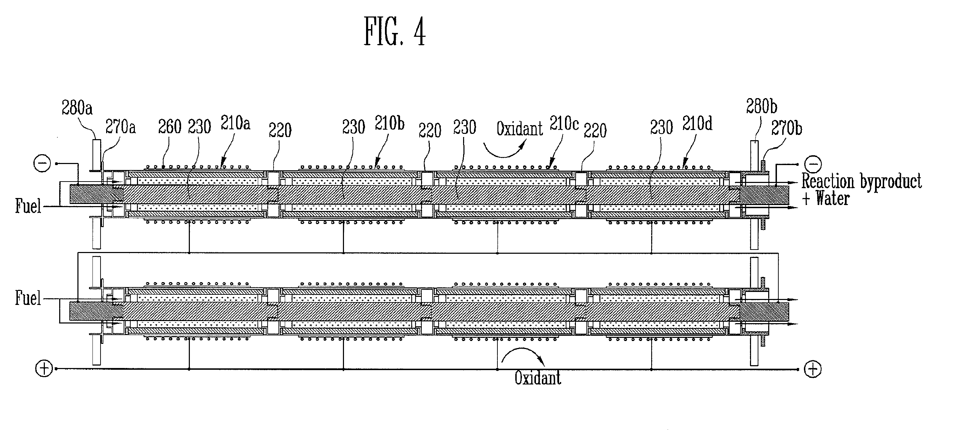

FIG. 4 is a sectional view illustrating an SOFC stack using the combined cell structure of FIG. 2.

Referring to FIG. 4, the SOFC stack of this embodiment is manufactured by preparing one combined cell structure and stacking a plurality of prepared combined cell structures. Here, the one combined cell structure is formed by combining support members 230 respectively provided to a plurality of tube-type or flat-tube-type sub-cells 210a, 210b, 210c and 210d with one another. In each of the combined cell structures, a connector 220 is inserted between the sub-cells, and a boundary portion between the SOFC cell and the connector 220 may be sealed by a sealing member.

For forming cathode current corrector, a silver (Ag) wire may be wound on a second electrode of each of the sub-cells, or a porous cathode current collecting layer on which a La_{0.9}Sr_{0.1}CoO₃ powder is coated using a plasma spray technique may be formed on the second electrode of each of the sub-cells. A wire or mesh formed of stainless and Ni-based heat-resistant alloy may be used as the material of the cathode current collector. In this embodiment, an Ag wire 250 is used as the cathode current collector, and the support member 230 is used as the anode current collector.

One end of the combined cell structure having the four sub-cells 210a, 210b, 210c and 210d combined with one another may be connected to a first manifold 280a by a first end connector 270a, and the other end of the combined cell structure may be connected to a second manifold 280b by a second end connector 270b. In this case, the two end connectors 270a and 270b allows the combined cell structure and the two manifolds 280a and 280b to be connected so that a fluid flows therethrough while allowing the connection structure of the support members 230 passing through the sub-cells from one end to the other end to be fixed to the two manifolds 280a and 280b.

In one embodiment, each of the end connectors 270a and 270b includes a rod-shaped body connected to the support body 230, and a shielding portion for surrounding the body in the form of a band at a predetermined distance while supporting between the body and the manifold. At least one opening provided is provided to the shielding portion. Here, the opening is provided so that a fuel flows by passing through the shielding portion. The body may be inserted into an opening of the manifold. A projection may be provided to at least one surface of the shielding portion. A corner of the connector 220 or the manifold 280a or 280b may come in contact between the shielding portion and the projection.

In one embodiment, the end connector 270a or 270b and the manifold 280a or 280b may be electrically isolated from each other by a separate insulating member or insulating coating layer. The plurality of combined cell structures are configured so that the wire 260 for collecting cathode current in at least one first combined cell structure is connected to the support member 230 in at least one second combined cell structure. In this embodiment, the physical contact between the wire 260 of the first combined cell structure and the support member 230 of the second combined cell structure may be formed in at least any one of the two manifolds 280a and 280b respectively connected to both ends of the first and second combined cell structures.

Hereinafter, the operation of the SOFC stack of this embodiment will be described in detail.

In FIG. 4, a fuel is flowed from the first manifold 280a to a side of each a hollow portion of a plurality of the combined cell structures. Then, the fuel is flowed into the second manifold 280b by passing through a porous member 240 in each of the sub-cells along the outer surfaces of the support members 230. Oxygen in the air circulating the exterior of the combined cell structure may be used as an oxidant, and the fuel may include methane, propane, butane and the like.

In each of the combined cell structures, electricity is generated by an electrochemical reaction of hydrogen and oxygen. Here, the hydrogen is supplied to the first electrode exposed to the inner surface of the hollow portion of each of the sub-cells, and the oxygen is supplied to the second electrode exposed to the outer surface of each of the sub-cells. That is, the fuel flowed into the combined cell structure is reformed under a temperature atmosphere of about 600 to 1000°C and converted into a reformate containing oxygen. The hydrogen supplied to the first electrode is bonded to oxygen ions by help of an anode catalyst of the first electrode under a high-temperature atmosphere, thereby producing water and electrons. Meanwhile, the oxygen supplied to the second electrode is bonded to electrons moved from the first electrode through an external circuit or load (not shown) connected to the SOFC stack by help of a cathode catalyst of the second electrode under a high-temperature atmosphere, and thus converted into oxygen ions. The oxygen ions are moved to the second electrode by passing through an electrolyte. The water produced by the reaction of the hydrogen and the oxygen ions is discharged together with an unreacted fuel to the second manifold 280b along the flow direction of the fuel on the outer surface of the rod-shaped support member 230. The electrons produced by the reaction of the hydrogen and the oxygen ions at the first electrode supply electric power to the load while moving toward the second electrode. The electrochemical reactions respectively generated at the first and second electrodes (anode and cathode) of each of the sub-cells are represented by the following reaction formula 1.

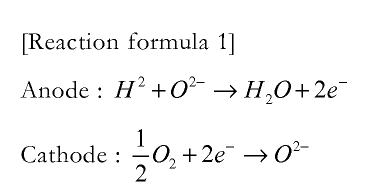

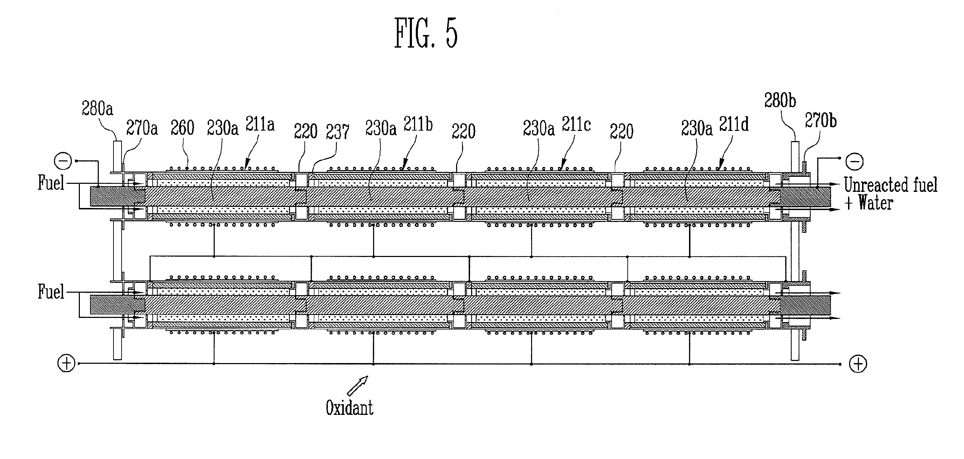

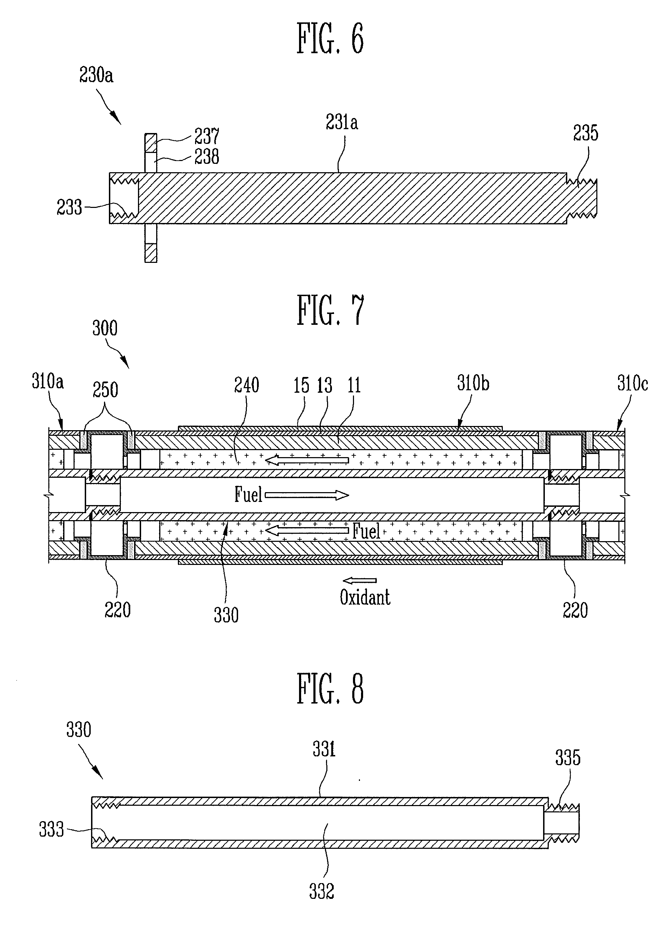

FIG. 5 is a sectional view illustrating an SOFC stack using a combined cell structure according to still another embodiment of the present invention. FIG. 6 is a sectional view of a support member used in the SOFC stack using the combined cell structure of FIG. 5.

Referring to FIG. 5, the SOFC stack is manufactured by stacking or arranging a plurality of combined cell structures. Here, each of the combined cell structures is formed by combining a plurality of support members 230a respectively provided to a plurality of sub-cells 211a, 211b, 211c and 211d with one another. The SOFC stack of this embodiment is substantially identical to the SOFC stack illustrated in FIG. 4, except the electrical serial connection structure between the support members 230a and the combined cell structures.

As illustrated in FIG. 6, the support member 230a has a rod-shaped body 231a with a predetermined length, of which the interior is fully filled. Female and male screws 233 and 235 used in combination with another support member are provided to both end portions of the body 231a, respectively. The support member 230a is provided with a protruding portion 237 for surrounding the body 231a in the form of a ring with a predetermined thickness from the portion having the female screw 233 formed therein to the radial direction of the body 231a. A plurality of openings 238 are provided to the protruding portion 237 so that a fuel can flow by passing through the protruding portion 237.

Referring back to FIG. 5, in the SOFC stack of this embodiment, the plurality of combined cell structures are configured so that a wire 260 for collecting cathode current in at least one first combined cell structure is connected to the support member 230a in at least one second combined cell structure. That is, a physical contact for electrical connection between the first and second combined cell structures is formed on the protruding portion 237 of the support member 230a positioned at the exterior of each of the manifolds 280a and 280b.

FIG. 7 is a partial sectional view of a combined cell structure according to still another embodiment of the present invention. FIG. 8 is a sectional view of a support member in the combined cell structure of FIG. 7.

Referring to FIG. 7, the combined cell structure 300 includes a plurality of sub-cells 310a, 310b and 310c combined with one another in a direction along which a fuel flows, and connectors 220 disposed between adjacent sub-cells. The plurality of sub-cells are combined with one another in a longitudinal direction by combination of solid support members 330 respectively provided thereto. Each of the sub-cells may has a porous member 240 disposed between the support member 330 and a first electrode 11. A sealing member 250 may be provided between each of the sub-cells and the connector 220.

As illustrated in FIG. 8, the support member 330 of this embodiment includes a pipe-shaped body 331 having a predetermined length. The body 331 has a hollow portion 332 and may have a circular section or a polygonal section inscribed or circumscribed in a circle. Female and male screws 333 and 335 used in combination with another support member are provided at both end portions of the body 331, respectively. The female screw 333 is provided to an inner surface of the body 331, and the male screw 335 is provided to an outer surface of the body 331. The support member 330 is formed of a solid material such as stainless steel, having a predetermined strength or more.

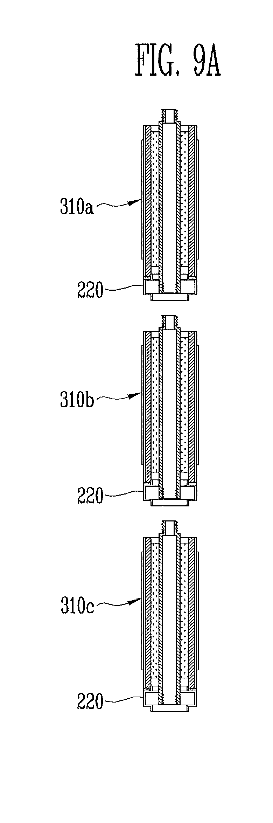

FIGS. 9A to 9C are sectional views illustrating a process of manufacturing an SOFC stack using the combined cell structure of FIG. 7.

First, as illustrated in FIG. 9A, the first, second and third sub-cells 310a, 310b and 310c are prepared, and the connector 220 is connected to one end of each of the sub-cells. The sealing member 250 is provided between each of the sub-cells and the connector 220. It will be apparent that each of the sub-cells and the connector 220 may be joined with each other using a brazing technique or the like.

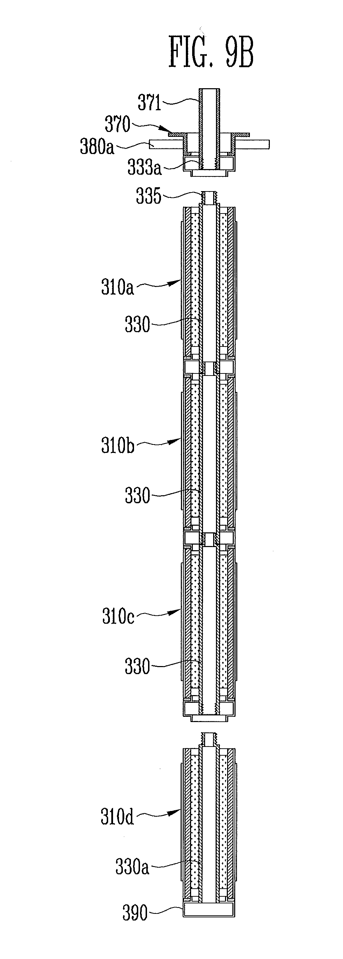

Subsequently, as illustrated in FIG. 9B, the support members 330 between the adjacent sub-cells 310a, 310b and 310c are screw-connected to each other. Then, a fourth sub-cell 310d is prepared, and a male screw 335 of a support member 330a of the fourth sub-cell 310d is screw-connected to the female screw 333 of the support member 330 in the third sub-cell 310c. The support member 330a of the fourth sub-cell 310d may have a structure in which a female screw is omitted at one end of the support member 330a, as compared with the other support members 330. One end of the fourth sub-cell 310d is closed by a cap 390 with a predetermined distance from the support member 330a.

The male screw 335 of the support member 330 in the first sub-cell 310a is screw-connected to a female screw 333a of an end connector 370 fixedly combined with a first manifold 380a. The end connector 370 may have a pipe-shaped body 371 for supplying a fuel to the hollow portion of the support member 330.

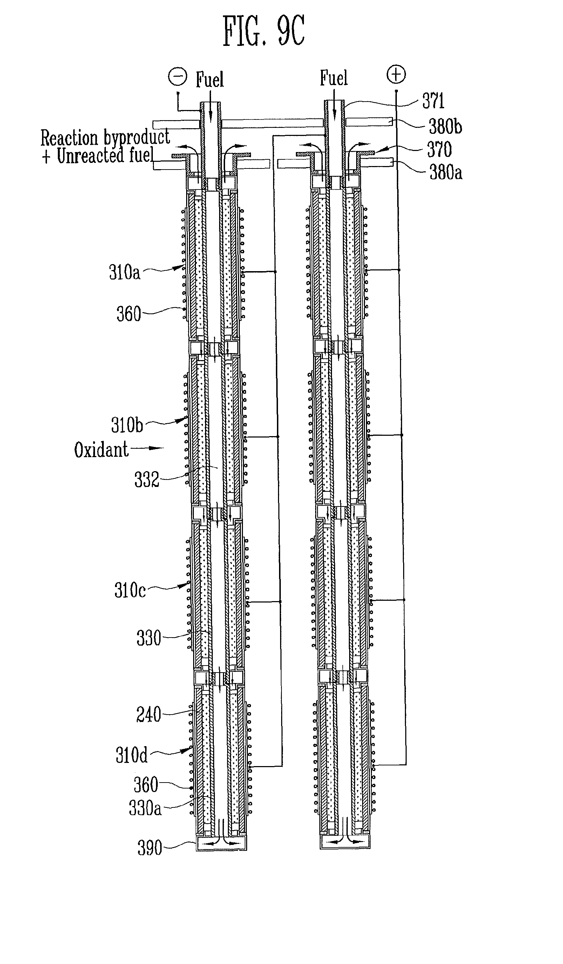

Subsequently, as illustrated in FIG. 9C, an SOFC stack is manufactured by appropriately stacking or arranging a plurality of combined cell structures each having the first to fourth sub-cells 310a, 310b, 310c and 310d combined with one another in the flow direction of a fuel. The plurality of combined cell structures may be fixedly connected to the manifold by the end connector 370.

In one embodiment, the pipe-shaped body 371 of the end connector 370 is connected between the first manifold 380a and a second manifold 380b so that a fuel can be supplied to each of the combined cell structures by passing from the second manifold 380b to the first manifold 380a. The first and second manifolds 380a and 380b may be formed into a two-level structure at one side of the combined cell structures.

Then, a cathode current collecting layer 360 is formed by winding an Ag wire on the second electrode of each of the sub-cells 310a, 310b, 310c and 310d in each of the combined cell structure. In this embodiment, the plurality of combined cell structures are electrically connected to each other in series through the end connector 370 in the first manifold 380a.

Hereinafter, the operation of the SOFC stack of this embodiment will be described in detail.

Referring to FIG. 9C, a fuel is supplied from the second manifold 380b to the hollow portion 332 of the support member 330 in each of the combined cell structures through the pipe-shaped body 371 of the end connector 370. The fuel coming out from the hollow portion of the support member 330a in the fourth sub-cell 310d positioned at one end portion of each of the combined cell structures passes through the porous member 240 while flowing in the opposite direction to the inflow direction of the fuel along the outer surfaces of the support members 330a and 330 in the sub-cells.

Most of the fuel supplied to each of the combined cell structures is converted into a reformate containing hydrogen under a high-temperature atmosphere. The hydrogen is distributed and supplied to the first electrodes of the respective sub-cells 310a, 310b, 310c and 310d through the porous member 240.

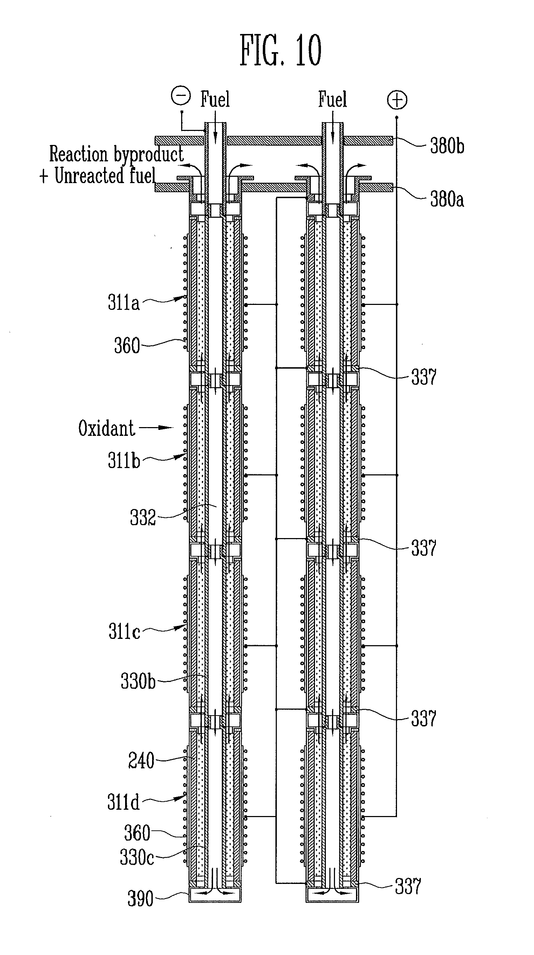

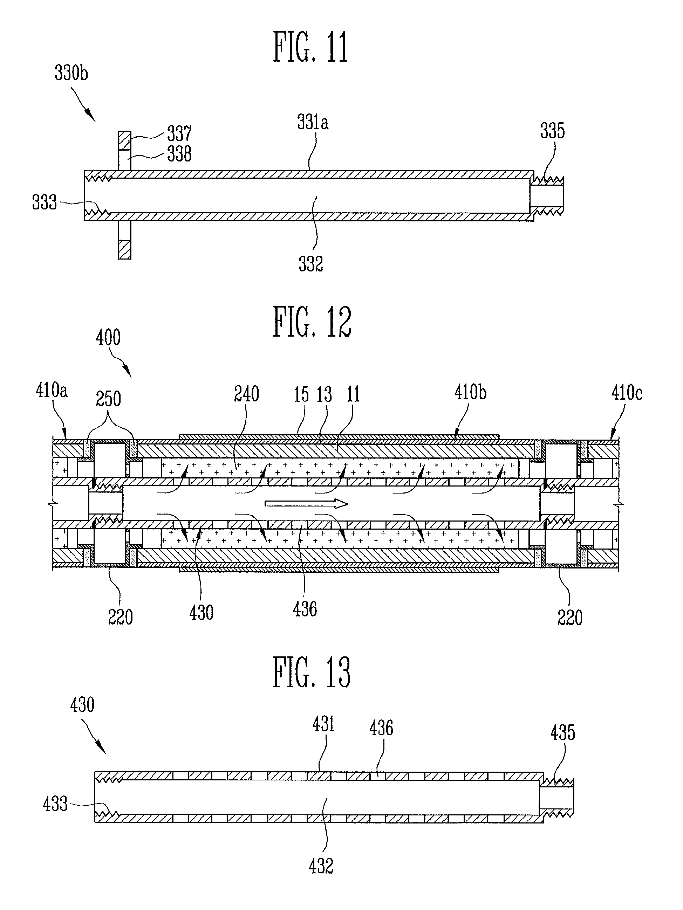

The hydrogen supplied to the first electrode electrically reacts with oxygen supplied to the second electrode in the air, and electricity and water are produced accordingly. The electricity is supplied to an external load (not shown) connected to the anode and cathode of the SOFC stack. The water is discharged together with an unreacted fuel to the first manifold 380a along the flow direction of the fuel. FIG. 10 is a sectional view illustrating an SOFC stack using a combined cell structure according to still another embodiment of the present invention. FIG. 11 is a sectional view of a support member used in the SOFC stack using the combined cell structure of FIG. 10.

Referring to FIG. 10, the SOFC stack of this embodiment is manufactured by appropriately arranging a plurality of combined cell structures. Here, each of the combined cell structures is formed by combining support members 330b respectively provided to a plurality of sub-cells 311a, 311b, 311c and 311d with one another. The SOFC stack of this embodiment is substantially identical to the SOFC stack illustrated in FIG. 9, except the electrical serial connection structure between the support members 330b and 330c and the combined cell structures.

As illustrated in FIG. 11, the support member 330b includes a pipe-shaped body 331a having a hollow portion 322. Female and male screws 333 and 335 used in combination with another support member are provided to both end portions of the body 331a, respectively. A protruding portion 337 for surrounding the body 331a in the form of a ring with a predetermined thickness is provided at a portion adjacent to the portion of the support member 330b, in which the female screw 333 is formed. A plurality of openings 338 are provided to the protruding portion 337 so that a fluid can flow by passing through the protruding portion 337. The plurality of openings 338 may be formed corresponding to the second holes 224 of FIG. 3C, respectively. The support member 330c is substantially identical to the support member 330a of the fourth sub-cell 310d of FIG. 9B, except that the protruding portion 337 is provided to the support member 330c like the support member 330b.

Referring back to FIG. 10, in the SOFC stack of this embodiment, the plurality of combined cell structures are configured so that a cathode current collecting layer 360 in at least one combined cell structure is electrically connected to the protruding portion 337 of at least one support member 330b in at least another combined cell structure.

FIG. 12 is a partial sectional view of a combined cell structure according to still another embodiment of the present invention. FIG. 13 is a sectional view of a support member in the combined cell structure of FIG. 12.

Referring to FIG. 12, the combined cell structure 400 includes a plurality of sub-cells 410a, 410b and 410c combined with one another in the flow direction of a fuel, and connectors 220 disposed between adjacent sub-cells. The plurality of sub-cells are combined with one another by combination structures of solid support members 430 respectively provided to the sub-cells. Each of the sub-cells may has a porous member 240 disposed between the support member 430 and a first electrode 11. A sealing member 250 may be provided between each of the sub-cells and the connector 220.

As illustrated in FIG. 13, the support member 430 of this embodiment includes a pipe-shaped body 431 having a predetermined length. The body 431 has a hollow portion 432, and a plurality of openings 436 formed by cutting portions of the body 431 are provided between both end portions of the body 431. Female and mail screws 433 and 435 used in combination with another support member are provided to both end portions of the body 431. The support member 430 is formed of a solid material such as stainless steel.

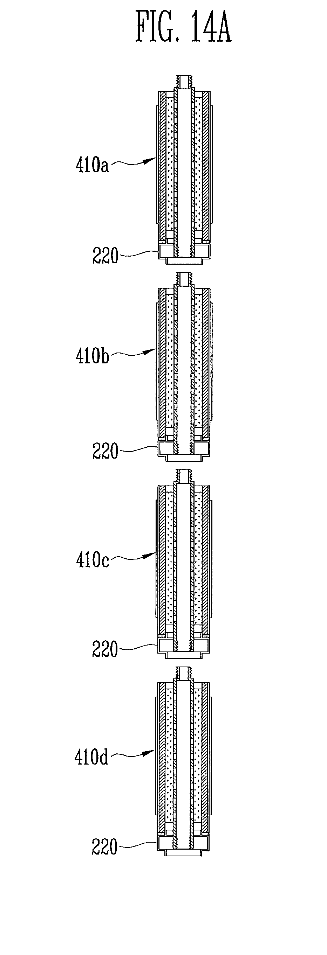

FIGS. 14A to 14C sectional views illustrating a process of manufacturing an SOFC stack using the combined cell structure of FIG. 12.

First, as illustrated in FIG. 14A, the first, second, third and fourth sub-cells 410a, 410b, 410c and 410d are prepared, and the connector 220 is connected to one end of each of the sub-cells. Each of the sub-cells and the connector 220 may be properly joined using a sealing member or a brazing technique.

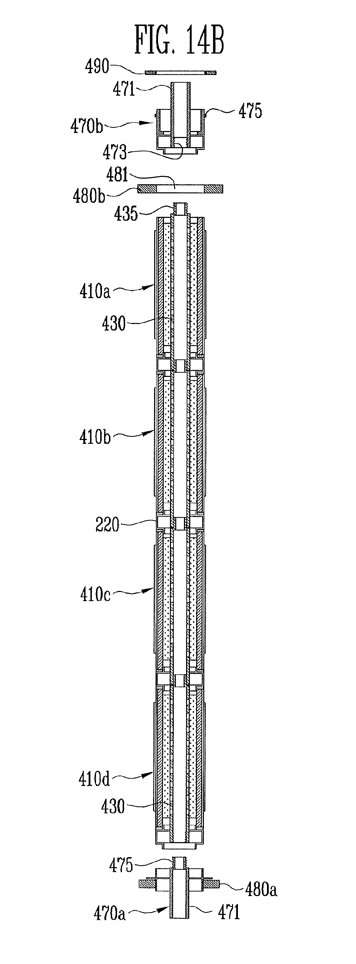

Subsequently, as illustrated in FIG. 14B, the support members 330 between the adjacent sub-cells 410a, 410b, 410c and 410d are screw-connected to each other. Then, a male screw 475 of a first end connector 470a fixedly combined with a first manifold 480a is screw-connected to the female screw 433 of the support member 430 in the fourth sub-cell 410d. The first end connector 470a may have a pipe-shaped body for supplying a fuel to the hollow portion of the support member 430 in each of the sub-cells.

Then, a female screw 473 of a second end connector 470b inserted into an opening 481 of a second manifold 480b is screw-connected to the male screw 335 of the support member 430 in the first sub-cell 410a. The second end connector 470b includes a pipe-shaped inner body 471 provided to discharge a fluid coming out from the combined cell structure, an outer body for surrounding the inner body 471 in the form of a double pipe, a connecting portion for connecting between the inner body 471 and the outer body, and a plurality of openings provided to the connecting portion so that the fluid can pass through the connecting portion. The structure of the second end connector 470b is substantially similar to that of the connector 220.

After the support member 430 in the first sub-cell 410a is combined with the second end connector 470b, the second end connector 470b is closely fixed to the second manifold 480b by a fixing member 490. The fixing member 490 is formed in a ring shape and may include a nut having screw threads formed on the inner circumferential surface of the ring shape. In this case, the second end connector 470b may have the male screw 475 on its outer surface so that the fixing member 490 is screw-connected to the second end connector 470b.

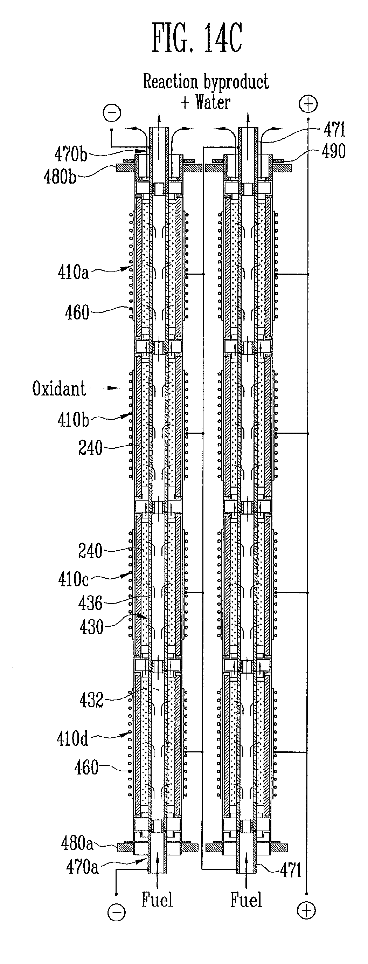

Subsequently, as illustrated in FIG. 14C, an SOFC stack is manufactured by appropriately stacking or arranging a plurality of combined cell structures each having the first to fourth sub-cells 410a, 410b, 410c and 410d combined with one another in the flow direction of a fuel. The plurality of combined cell structures may be combined with the first and second manifolds 480a and 480b by the first and second end connectors 470a and 470b, respectively.

In one embodiment, the first and second end connectors 470a and 470b connect the first and second manifolds 480a and 480b to each of the combined cell structures disposed between the first and second manifolds 480a and 480b so that a fuel is supplied from the first manifold 480a to each of the combined cell structures, and a reaction product such as water and an unreacted fuel are discharged to the second manifold 480b.

A cathode current collecting layer 460 is provided on the second electrode of each of the sub-cells 410a, 410b, 410c and 410d in each of the combined cell structures. In this embodiment, the cathode current collecting layer 460 formed with an Ag wire on each of the sub-cells in at least one first combined cell structure is configured to be connected to at least any one end connector 470a or 470b connected to at least one second combined cell structure. That is, the cathode current collecting layer 460 in the first combined cell structure is electrically connected to the end connectors 470a and 470b connected to the second combined cell structure, thereby forming a serial connection structure in the SOFC stack. Hereinafter, operation of the SOFC stack of this embodiment will be described in detail.

Referring to FIG. 14C, a fuel is supplied from the first manifold 480a to the hollow portion of the support member 430 in each of the combined cell structures through the pipe-shaped body 471 of the first end connector 470a. Most of the fuel is flowed from the hollow portion 432 to the outer surface of each of the support member 430 through the openings 436 and then moved by passing through the porous member 240. The rest of the supplied fuel is moved to the second manifold 480b along the hollow portion 432 of each of the support member 430.

The fuel in the combined cell structure is converted into a reformate containing oxygen, and the oxygen is supplied to the first electrode of each of the sub-cells 410a, 410b, 410c and 410d. The hydrogen supplied to the first electrode electrically reacts with oxygen supplied to the second electrode in the air, and electricity and water are produced accordingly. The electricity is supplied to an external load (not shown) connected to the anode and cathode of the SOFC stack. The water is discharged together with an unreacted fuel to the second manifold 480b along the flow direction of the fuel.

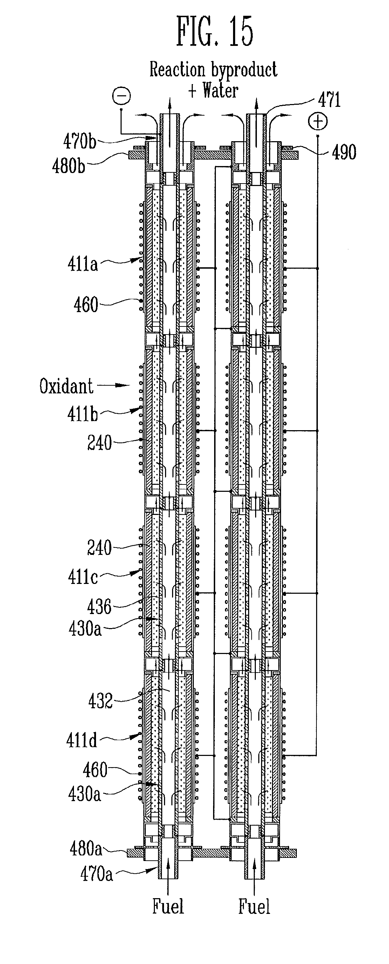

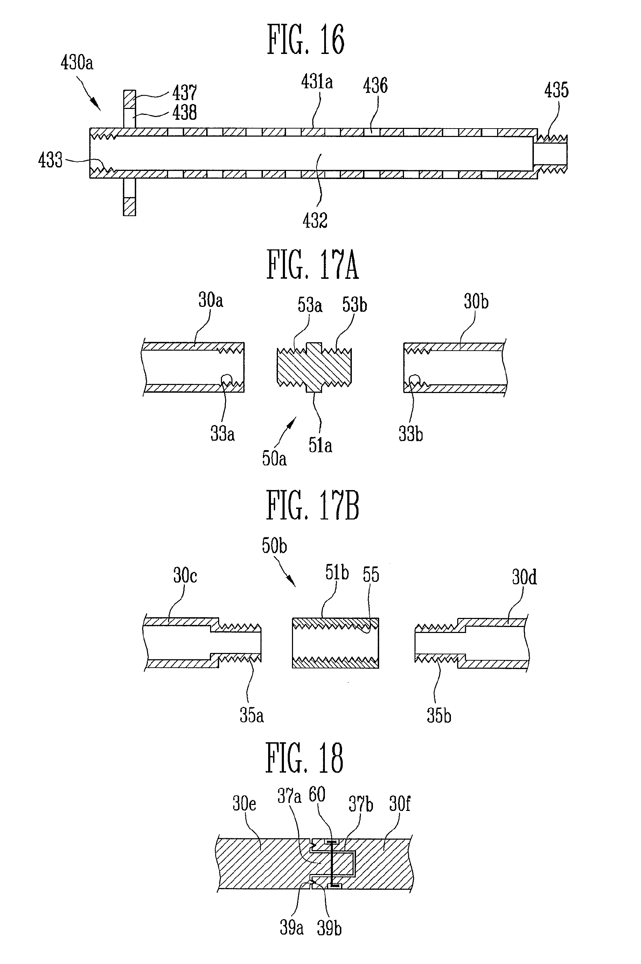

FIG. 15 is a sectional view illustrating an SOFC stack using a combined cell structure according to still another embodiment of the present invention. FIG. 16 is a sectional view of a support member used in the SOFC stack using the combined cell structure of FIG. 15.

Referring to FIG. 15, the SOFC stack is manufactured by stacking or arranging a plurality of combined cell structures. Here, each of the combined cell structures is formed by combining support members 430a respectively provided to a plurality of sub-cells 411a, 411b, 411c and 411d with one another. The SOFC stack of this embodiment is substantially identical to the SOFC stack illustrated in FIG. 14C, except the electrical connection structure between the support member 430a and the combined cell structures.

As illustrated in FIG. 16, the support member 430a includes a pipe-shaped body 431a. The support member 430a is formed of a solid conducting material having a predetermined strength or more. The material of the support member 430a may include stainless steel, nickel, nickel alloy and the like. The body 431a has a hollow portion 432, and a plurality of openings 436 formed by cutting portions of the body 431a are provided between both end portions of the body 431a. Female and male screws 433 and 435 used in combination with another support member are provided at both end portions of the body 431a, respectively.

The plurality of openings 436 may be regularly arranged at a predetermined interval or may be irregularly arranged without a predetermined interval. The plurality of openings 436 may be formed to have an appropriate size and number within a range in which the strength of the support member 430a is not deteriorated so much. The support member 430a may have a protruding portion 437 for surrounding the body 431a in a ring shape at a portion in which the male screw 433 is formed. A plurality of openings 438 are provided to the protruding portion 437 so that a fluid can flow by passing through the protruding portion 437.

Referring back to FIG. 15, in the SOFC stack of this embodiment, the plurality of combined cell structures are configured so that a cathode current collecting layer 460 in at least one first combined cell structure is connected to the protruding portion 437 of at least one support member 430a in at least one second combined cell structure. That is, an electrical connection node between the first and second combined cell structures may be formed on the protruding portion 437 of the support member 430a in the second combined cell structure positioned at the exterior of the manifolds 480a and 480b.

FIGS. 17A and 17B are sectional views illustrating the combined structures of another shaped support members applicable to the combined cell structure according to the embodiments of the present invention.

In the combined cell structures of the aforementioned embodiments, the connection structure between support members may include a structure in which the support members are connected using a first coupling member 50a provided with two male screws 53a and 53b respectively formed at both sides of a body 51a having the same sectional shape as that of the support member as illustrated in FIG. 17A, in addition to the structure in which a female screw of a first support member and a male screw of a second support member in adjacent sub-cells are directly connected to each other. When using the first coupling member 50a, female screws 33a and 33b are provided at end portions of the of two supporting members 30a and 30b connected to each other in a longitudinal direction, respectively. Here, the end portions of the two support members 30a and 30b face each other with the first coupling member 50a interposed therebetween.

On the other hand, in the combined cell structures of the aforementioned embodiment, the connection structure between support members may include a structure in which the support members are connected using a second coupling member 50b having screw threads formed at the inside of a pipe-shaped body 51b as illustrated in FIG. 17B. When using the second coupling member 50b, male screws 35a and 35b are provided at end portions of the of two supporting members 30c and 30d connected to each other in a longitudinal direction, respectively. Here, the end portions of the two support members 30c and 30d face each other with the second coupling member 50b interposed therebetween.

FIG. 18 is a sectional view illustrating another combined structure of still another shaped support members applicable to the combined cell structure according to the embodiments of the present invention.

In the combined cell structures of the aforementioned embodiment, the connection structures between support members may include a structure in which rod-shaped first and second support members 30e and 30f are combined by inserting a first irregular portion 37a positioned at one end of the first support member 30e into a second irregular portion 37b positioned at one end of the second support member 30f as illustrated in FIG. 18, in addition to the structure in which a male screw of a first support member and a female screw of a second support member in adjacent sub-cells are screw-connected to each other. The section of the first irregular portion 37a may have a circular section or a polygonal section inscribed or circumscribed in a circle. The section of a concave portion of the second irregular portion 37b may have a shape into which the first irregular portion 37a can be tightly inserted.

In one embodiment, the first and second support members 30e and 30f may respectively have at least a pair of a projection 39a and a groove 39b combined to prevent the first and second irregular portions 37a and 37b from being rotated in their combination.

In one embodiment, there may be provided at least a fixing member 60 for simultaneously passing through the first and second irregular portions 37a and 37b combined to prevent the first and second support members 30e and 30f from being separated from each other. The fixing member 60 may be formed in a pin shape and may have a head portion formed at one end of the fixing member 60. Here, the section of the head portion is larger than those of other portions of the fixing member 60. The end portion of the fixing member 60 passing through the first and second support members 30e and 30f may be bent in the longitudinal direction of the support member and closely adhered to a surface of the support member. These embodiments have at least four effects as follows.

First, a tube-type anode support member used in an anode supported SOFC cell is generally formed of a material such as a porous Ni-YSZ cermet, and the anode supported SOFC cell is generally manufactured as a cell having a length of 30cm or shorter because of limitation of the mechanical strength of the material, high internal resistance, reduction of yield caused by its large area, and the like. However, in these embodiments, a plurality of tube-type anode supported SOFC cells are combined in a longitudinal direction using solid support members provided to each of the SOFC cells, thereby easily providing an SOFC combined cell structure having a length of about 120cm or longer.

Second, when a plurality of anode supported SOFC cells are simply combined in a longitudinal direction (i.e., a comparative example), the combination of the anode supported SOFC cells is easily broken by temperature distribution (or temperature difference) of the combined cells or mechanical stress generated at a connecting portion with a manifold. However, in these embodiments, the plurality of anode supported SOFC cells are combined in the flow direction of a fuel using solid support members provided to each of the SOFC cells, thereby providing an SOFC combined cell structure that is not broken by the thermal or mechanical stress. Further, when using such an SOFC combined cell structure, a large-size SOFC system can be easily designed and manufactured.

Third, when a large-size SOFC system is simply manufactured using a plurality of anode supported SOFC cells (i.e., another comparative example), the design of a manifold for distributing and supply a fuel to each of the SOFC cells is very difficult due to a large number of SOFC cells. However, in these embodiment, there is used an SOFC combined cell structure having a plurality of SOFC cell combined in a longitudinal direction, so that the design of the manifold can be simplified by considerably decreasing the number of SOFC cells. Accordingly, the uniform fuel supply for each of the SOFC cells can be easily achieved.

Fourth, when a plurality of anode supported SOFC cells are simply combined in a longitudinal direction so that their length is increased (i.e., still another comparative example), electrical resistance between the SOFC cells is increased, and external current collection is very difficult. However, in these embodiments, a conductive support member is used to pass through a hollow portion of tube-type or flat-tube-type SOFC cells, so that external current collection can be easily performed without increasing electrical resistance between the SOFC cells.

Although the present invention has been described in connection with the accompanying drawings and the preferred embodiments, the present invention is not limited thereto. In addition, it will be understood by those skilled in the art that various modifications and changes can be made thereto without departing from the disclosure of the embodiments.

## Claims

1. A combined cell structure for a solid oxide fuel cell comprising first and second cells (10) each having a first electrode (11), a second electrode (15) and an electrolyte layer (13) interposed between the first and second electrodes (11, 15); a first support member (30, 230, 330, 430) passing through a hollow portion of the first cell; and a second support member (30, 230, 330, 430) passing through a hollow portion of the second cell, wherein an end of the first support member (30, 230, 330, 430) and an end of the second support member (30, 230, 330, 430) are connected to each other.

2. The combined cell structure of claim 1, wherein each first electrode (11), second electrode (15) and electrolyte layer (13) comprise concentric layers with the support member (30, 230, 330, 430) positioned along a central axis.

3. The combined cell structure of claim 1 or 2, wherein each end of the first and second support members (30, 230, 330, 430) includes a threaded portion (233, 235, 333, 335, 433, 435, 33a, 33b, 35a, 35b) for connecting the support members (30, 230, 330, 430) to each other.

4. The combined cell structure of any one of the preceding claims, wherein the ends of the first and second support members (30, 230, 330, 430) are directly connected to each other.

5. The combined cell structure of any one of claims 1 to 3, further comprising a coupling member (50a, 50b) for connecting the ends of first and second support members (30a, 30b, 30c, 30d).

6. The combined cell structure of any one of the preceding claims, further comprising a connector (20, 220) interposed between the first and second cells (10).

7. The combined cell structure of claim 6, wherein the connector (20, 220) is disposed to be resiliently deformed by stress of first or second cells (10).

8. The combined cell structure of claim 6 or 7, further comprising a sealing member (250) disposed in at least one of spaces between the first cell and the connector (220) and between the second cell and the connector (220).

9. The combined cell structure of any one of the preceding claims, wherein each of the first and second support members (30, 230) is a solid rod or wherein each of the first and second support members (330, 430) is a tube.

10. The combined cell structure of claim 9, wherein each of the first and second support members (330, 430) is a tube and wherein the tube comprises a plurality of openings or holes (436) in a side wall of the tube.

11. The combined cell structure of any one of the preceding claims, wherein each of the first and second support members comprise a protruding portion (237, 337, 437) protruding radially from an end portion thereof, wherein the protruding portion may be in the shape of a ring and/or wherein the protruding portion may comprise a plurality of holes (238, 338, 438) for allowing fluid to flow through the protruding portion.

12. The combined cell structure of claim 11, wherein the protruding portion is exposed to the outside of the combined cell structure.

13. The combined cell structure of any one of the preceding claims, further comprising porous members (240) respectively disposed between the first electrodes (11) and the first and second support members (30, 230, 330, 430).

14. The combined cell structure of any one of the preceding claims, further comprising a current collector (260, 360, 460) configured to come in contact with the second electrode (15).

15. The combined cell structure of any one of the preceding claims, wherein the first electrode (11) has at least one of a circular shape, an elliptical shape or a polygonal tube shape.
